# EUROPÄISCHE PATENTSCHRIFT

(11) **EP 3 183 469 B1**
(45) Veröffentlichungstag und Bekanntmachung des Hinweises auf die Patenterteilung: **19.02.2020**
(21) Anmeldenummer: 15767420.1
(22) Anmeldetag: 14.08.2015
(51) Int. Cl.: F16F 13/10

(54) **MEMBRANWEGBEGRENZUNG**
MEMBRANE TRAVEL LIMITER
LIMITATION DE COURSE D'UNE MEMBRANE

(30) Priorität: 18.08.2014 DE 102014216327
(43) Veröffentlichungstag der Anmeldung: 28.06.2017
(73) Patentinhaber: BOGE Elastmetall GmbH, 49401 Damme (DE)
(72) Erfinder: SCHARF, Jörg, 65558 Eppenrod (DE); SCHRÖTER, Sebastian, 53489 Sinzig (DE); RUDOLF, Waldemar, 38442 Wolfsburg (DE); SCHOLZ, Stefan, 38448 Wolfsburg (DE); SCHLOSSER, Alexander, 35305 Grünberg (DE)
(74) Vertreter: Bossmeyer, Jörg Peter
(86) Internationale Anmeldenummer: PCT/EP2015/068776
(87) Internationale Veröffentlichungsnummer: WO 2016/026786

(56) Entgegenhaltungen:
- EP-A2- 2 060 823
- DE-A1- 3 638 647
- US-A- 4 651 980
- US-A1- 2014 175 719

## Beschreibung

Die Erfindung betriff ein hydraulisch gedämpftes Aggregatlager, insbesondere für ein Kraftfahrzeug, das Aggregatlager aufweisend eine Kanaleinheit, welche eine zumindest bereichsweise schwingungsfähig angeordnete Membran aus einem gummielastischen Werkstoff und zumindest eine Wegbegrenzung zur Begrenzung einer Auslenkung der Membran aufweist, wobei die zumindest eine Wegbegrenzung zur Verbesserung des Akustikverhaltens des Aggregatlagers nachgiebig ausgebildet ist.

Hydraulisch gedämpfte Lager für Getriebe und Motoren im Sinne von Aggregaten finden verbreitet Anwendung und weisen in der Regel ein aus einem Elastomer gebildetes Federelement zum Tragen des Aggregats auf. Das betreffende Federelement ist dabei zwischen einem Traglager und einem Auflager angeordnet und wird von einem Hydraulikvolumen gedämpft, welches selbst dieses Volumen teilweise begrenzt. Die schwingungsfähig angeordnete Membran trennt dabei zwei Kammern, in denen die hydraulische Flüssigkeit des Hydraulikvolumens untergebracht ist. Derartige Systeme kennt man etwa aus der DE 10 2010 021 193 A1 oder der EP 1 559 926 A1 US 2014/0175719 A1 offenbart ein gattungsgemäßes, hydraulisch gedämpftes Aggregatlager.

Hydraulisch verbunden sind die beiden Kammern, eine Arbeits- und eine Ausgleichskammer, durch die Kanaleinheit, die mit ihrem Kanal Schwingungen mit großer Amplitude und geringer Frequenz dämpft. Die zwischen den Kammern befindliche Membran wiederum isoliert die Amplituden kleiner, hochfrequenter Schwingungen, bei deren Einleitung in die Membran die Kanaleinheit nicht in Funktion tritt. Die Amplitudenentkopplung kleiner, hochfrequenter Schwingungen wird in hydraulischen Lagern mittels einer flexiblen Membran sichergestellt. Diese Membran ist vorliegend gummielastisch ausgebildet, was bedeutet, dass sie einen Materialwiderstand gegen eine ausgeübte Dehnung darstellt, der auf einer reversiblen Entropieänderung in den Makromolekülen des eine Matrix bildenden Membranmaterials fußt, deren Verstreckung durch Krafteinwirkung änderbar ist und sich nach Wegfall der äußeren Kraft unter Energieaufnahme aus der Umgebung in den ursprünglichen Zustand zurückentwickelt.

Dabei kann es bei solchen Systemen nachteilig sein bzw. ist explizit unerwünscht, dass bei extremer Belastung wie Schwellen- oder Schlaglochüberfahrt störende Klopfgeräusche erzeugt werden. Diese Klopfgeräusche entstehen dadurch, dass schlagartig Hydraulikflüssigkeit verdrängt wird, wodurch die Membran gegen die Wegbegrenzung beschleunigt wird. Die Beschleunigung der Membran entsteht durch eine extrem hohe und kurze Krafteinleitung, innerhalb derer es nicht möglich ist, die Hydraulikflüssigkeit durch den Kanal abzuführen.

Um der Geräuschentwicklung Herr zu werden wurde hierzu bereits vorgeschlagen, eine Membran gänzlich ohne Wegbegrenzung zu verwenden. Die akustische Verbesserung wird in diesem Fall jedoch durch eine massive Verringerung der Membranlebensdauer erkauft, die mit dem Fehlen der Begrenzung einhergeht. Die verringerte Lebensdauer resultiert dabei aus den hohen Verformungen der Membran, wobei es zu Ein- und Weiterreißen von deren Struktur bis hin zum Funktionsausfall kommt.

Ein anderer bzw. auch ergänzend anzusehender Vorschlag zur Ausgestaltung der Wegbegrenzung, der vor allem auf die Erhöhung der Lebensdauer der Membran abzielt, lautet dahingehend, die Membran mittels eines Ventiles zu schützen, wozu aber bislang keine funktionierenden Ausgestaltungen bekannt geworden sind.

Es ist daher die Aufgabe der vorliegenden Erfindung, ein Dämpfungskonzept für ein hydraulisch gedämpftes Aggregatlager zur Verfügung zu stellen, was die dargestellten Nachteile vermeidet und die Geräuschentwicklung bei schneller, extremaler Belastung des Lagers vermindert oder gar vermeidet.

Diese Aufgabe wird gelöst durch ein hydraulisch gedämpftes Aggregatlager, insbesondere für ein Kraftfahrzeug, das Aggregatlager aufweisend eine Kanaleinheit, welche eine zumindest bereichsweise schwingungsfähig angeordnete Membran aus einem gummielastischen Werkstoff und zumindest eine Wegbegrenzung zur Begrenzung einer Auslenkung der Membran aufweist, wobei die zumindest eine Wegbegrenzung zur Verbesserung des Akustikverhaltens des Aggregatlagers nachgiebig ausgebildet ist, und wobei die Membran in einem von der als maschenartiges Flächengebilde ausgebildeten Wegbegrenzung schlauchartig eingehüllten Rahmenteil aufgenommen ist, das mit der Kanaleinheit in Gebrauchsstellung lösbar verbindbar ist. Das Akustikverhalten des Aggregatlagers wird also verbessert, indem die Membran mittels einer flexiblen Wegbegrenzung gegen Überbelastung geschützt wird.

Die erfindungsgemäße Wegbegrenzung ist demnach in der Lage, einer auf sie ausgeübten Vorspannkraft nachzugeben, die sich bei der Wegbegrenzung in einer Dehnung mit der Auslenkungsrichtung der Membran als Vorzugsrichtung ausdrückt, die reversibel ist. Nicht notwendigerweise herrscht dabei in einer Belastungssituation der Membran auch tatsächlich Kontakt zwischen dieser und der Wegbegrenzung, etwa wenn der auf die Membran ausgeübte Impuls zu klein ist. Ist er aber ausreichend schnell und groß, kommt es zum Kontakt zwischen Membran und Wegbegrenzung, deren Nachgiebigkeit dazu führt, dass sie sich an die aus ihrer Neutralposition ausgelenkte Membran anpassen und mit zunehmender Auslenkung eine größer werdende flächige Unterstützung bieten kann. Kern der Erfindung ist demnach, dass eine elastische Wegbegrenzung vorgesehen ist. In eher bildlicher Sprache ausgedrückt, kann dabei die Begrenzung ohne die Last gespannt sein wie ein Trampolin oder lose flatternd wie ein Stück Textil, bspw. ein leerer Sack. In beiden Fällen ist jedenfalls unter Last eine Nachgiebigkeit gewährleistet.

Weitere vorteilhafte Ausgestaltungen der Erfindung ergeben sich aus den Unteransprüchen. So kann etwa in einer Ausgestaltung des Aggregatlagers eine Mehrzahl von Wegbegrenzungen vorgesehen sein, so dass Membranbewegungen in mehrere, jedenfalls aber in beide Hauptrichtungen flexibel geschützt sind, so dass bevorzugt zwei Wegbegrenzungen vorzusehen wären. Diese können zumindest die Flachseiten der Membran überwiegend überdecken.

In einer gut handzuhabenden Weiterbildung des Aggregatlagers kann die Wegbegrenzung eine an ihren Enden offene Schlauchform bilden, die die Membran einhüllt und zu deren Flachseiten benachbart angeordnet ist. Durch diese Ausbildung lässt sich die Membran besonders einfach an ihrem Anordnungsort mit der Begrenzung versehen, wobei hierdurch wiederum nichts zum lastfreien Vorspannungszustand der Wegbegrenzung ausgesagt ist.

Die Lebensdauer des Aggregatlagers wird bereits durch einfache Austauschbarkeit der Membran erhöht, da die Membran in dem Rahmenteil aufgenommen ist, das mit der Kanaleinheit in Gebrauchsstellung lösbar verbindbar ist. Das Rahmenteil kann hierbei beispielsweise durch Rast- oder Schnappverbindungen an der Kanaleinheit gehalten sein und durch deren Öffnung wieder von dieser gelöst werden. Hierbei kann außerdem ein an der Kanaleinheit vorgesehenes Bodenteil mit einem oder mehreren in den Durchgriff der Kanaleinheit ragenden Vorsprüngen oder Absätzen einen Anschlag für das Rahmenteil bilden.

Besonders gut an der Kanaleinheit anordenbar und auch austauschbar ist eine bevorzugte Ausführung des Aggregatlagers, bei der die Wegbegrenzung mit dem mit der Kanaleinheit verbindbaren, die Membran einfassenden Rahmenteil durch einen Herstellungsprozess dauerhaft verbunden ist.

Hinsichtlich des erwähnten Vorspannungszustandes kann bei einer vorteilhaften Weiterbildung des Aggregatlagers die nachgiebige Wegbegrenzung in Ruhestellung vorgespannt oder spannungsfrei angeordnet sein, ohne dass sich an ihrer prinzipiellen Funktionalität etwas änderte.

In einer zweckmäßigen Ausgestaltung des erfindungsgemäßen Aggregatlagers passt sich die Wegbegrenzung mit zunehmendem durch die Membran ausgeübtem Druck an deren Kontur an und bildet bei einer Weiterbildung zumindest in einem extremalen Auslenkungsbereich der Membran an dieser eine flächige Unterstützung. Hierbei ist die Wegbegrenzung dann zwar auch nachgiebig, mit zunehmender Auslenkung der Membran wird aber auch der durch die Wegbegrenzung entgegengesetzte Widerstand größer, so dass die Auslenkung effektiv begrenzt ist.

In einer bevorzugten Ausführung des Aggregatlagers, die die Anforderungen an Nachgiebigkeit bei gleichzeitiger flächiger Unterstützung der Membran unter Last gut erfüllt, kann die Wegbegrenzung das Flächengebilde aufweisen, das durch ein Gewebe, eine Maschenware, ein Gewirke oder einen Faserverbund aus wenigstens einem Material eines Textils, aus Glas, Kunststoff, Kohlenstoffverbindungen und/oder Aramid gebildet ist.

Bei einer vorteilhaften Weiterbildung des Aggregatlagers ist das Flächengebilde durch eine Maschenware gebildet und weist eine Maschenweite in der Größenordnung zwischen 0,5 und 2 Millimeter auf. Eine solche Maschenware ist ein textiles Flächengebilde, bei welchem eine mittels eines oder mehrerer Fäden gebildete Schleife in eine ebensolche andere Schleife hineingeschlungen ist. Demgegenüber ist das Flächengebilde von Geweben durch Verkreuzen von wenigstens zwei Schuss- und Kettfadensystemen hergestellt und weist eine geringere Dehnbarkeit und Elastizität auf. Generell ist dabei die einzelne Struktur der Membranbegrenzung aber nicht entscheidend, die, wie zuvor beschrieben, beispielsweise maschenartig oder gewebeartig sein kann, also eine regelmäßige Struktur aufweist. Sie kann hierbei auch in anderer Weise ausgebildet sein, etwa als durch Wärme verfestigter Faserflor, der aber dann naturgemäß andere Nachgiebigkeitseigenschaften aufweist. Wichtig ist vor allem, dass die Struktur die Gummimembran flächig unterstützt wird und dass sich die relativ dünne Gummimembran nicht in einzelne Löcher oder Ausnehmungen der Struktur drücken kann.

Eine das akustische Verhalten des Aggregatlagers weiter verbessernde Ausführung kann darin bestehen, die Membran mit einer Dicke von einigen mm, bevorzugt in der Größenordnung von 1 mm, besonders bevorzugt von weniger als 1 mm auszubilden. Dies wird deshalb möglich, weil die Membran eben mit einem flexiblen Gitter oder Gewebe vollflächig unterstützt werden kann und man sehr feinmaschige Gitter oder Gewebe verwendet. Dies ermöglicht es, Membrane zu verwenden, die deutlich dünner als bisherige sind. Solche extrem dünnwandige Membrane haben sich extrem vorteilhaft gegen Klopfgeräusche erwiesen.

Um eine zuverlässige Ankopplung der Membran an die Wegbegrenzung sicherzustellen oder diese auch in gewissen Grenzen zu manipulieren, kann es eine andere Ausführungsform des Aggregatlagers vorsehen, die Wegbegrenzung punkt-oder bereichsweise mit der Membran über wenigstens ein Verbindungsmittel zu verbinden. Eine vorteilhafte Weiterbildung kann dann etwa in der Ausbildung des Verbindungsmittels als flexibles Anlenkmittel in Form wenigstens eines Gumminoppens bestehen. Dieser kann beispielsweise vorteilhaft den Querschnitt der Membran vollständig und denjenigen einer ein- oder beidseitig der Membran angeordneten Wegbegrenzung wenigstens teilweise durchtreten. Der betreffende teilweise Durchtritt kann dabei an eine oder beiden Flachseiten der Membran stattfinden, an denen wiederum jeweils entweder ein teilweiser oder vollständiger Durchtritt vorgesehen sein kann.

Andere vorteilhafte Weiterbildungen, die Vorteile etwa bei der Herstellung bieten können, können es vorsehen, die wenigstens eine oder die Mehrzahl von Wegbegrenzungen jeweils an ihrer der Membran zugewandten Seite zumindest bereichsweise mit einem flächigen Elastomerauftrag zu versehen oder die wenigstens eine oder die Mehrzahl von Wegbegrenzungen selbst aus einem Elastomer auszubilden und zur Verstärkung einen aus Gummi mit einem weniger nachgiebigen oder formstabilen Kern zu versehen.

Die Erfindung wird nachstehend anhand eines Ausführungsbeispiels in der Zeichnung näher erläutert. In teilweise schematisierter Darstellung zeigen hierbei die
- Fig. 1: eine Seitenansicht eines Schnitts durch ein hydraulisch gedämpftes Aggregatlager mit Kanaleinheit, Membran und starrer Wegbegrenzung nach dem Stand der Technik;
- Fig. 2: eine perspektivische Seitenansicht der Kanaleinheit des Aggregatlagers aus der Fig.1 mit Membran und Wegbegrenzung;
- Fig. 3: eine Seitenansicht eines Schnitts durch ein erfindungsgemäßes hydraulisch gedämpftes Aggregatlager mit Kanaleinheit, Membran und nachgiebiger Wegbegrenzung;
- Fig. 4: eine perspektivische Seitenansicht der Membran des Aggregatlagers aus der Fig. 3 aus Richtung der Arbeitskammer des Hydraulikvolumens mit Kanaleinheit und nachgiebiger Wegbegrenzung;
- Fig. 5: eine perspektivische Seitenansicht des Membranträgers aus der Fig. 4 mit Membran und nachgiebiger Wegbegrenzung aus Richtung der Ausgleichskammer gesehen.
- Fig. 6: eine perspektivische, teilgeschnittene Seitenansicht der Kanaleinheit mit Membran und nachgiebiger Wegbegrenzung aus den Fig. 3 bis 5;
- Fig. 7: eine perspektivische Seitenansicht des die Membran aufnehmenden Rahmenteils mit nachgiebiger Wegbegrenzung;
- Fig. 8: eine weitere perspektivische, teilgeschnittene Seitenansicht den Membranträger aus den Fig. 3 bis 6, bei der der Schnitt auch in die Membran hinein geführt ist.

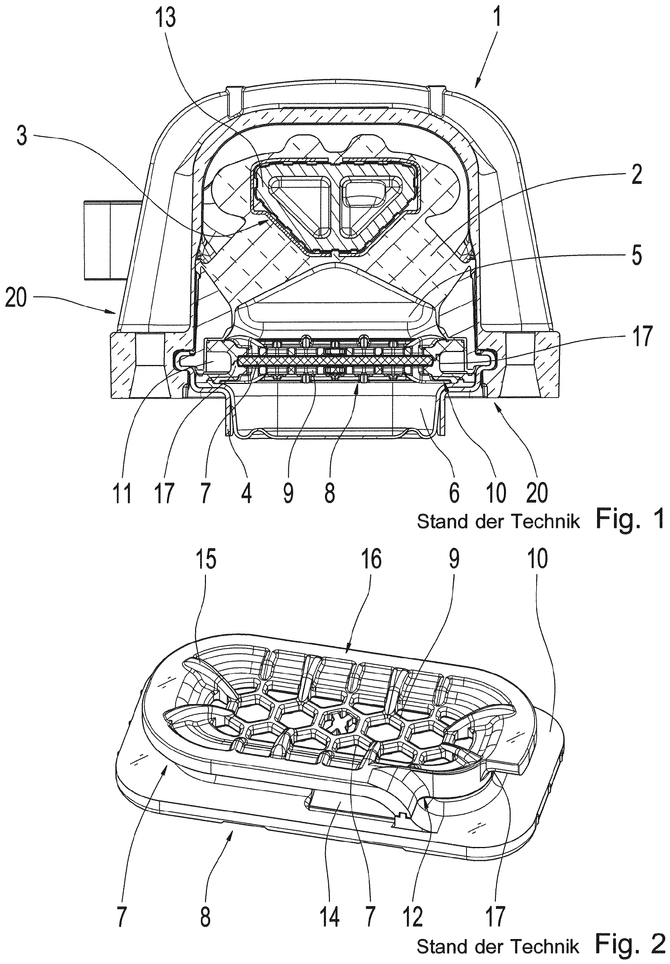

In den Fig. 1 und 2 ist ein hydraulisch gedämpftes, insgesamt mit 1 bezeichnetes Aggregatlager zu erkennen, bei dem die Wegbegrenzung 8 der Membran 7 nach dem Stand der Technik ausgeführt ist.

Gezeigt ist in den Fig. 1 und 2 ein Aggregatlager 1, bei dem eine Elastomerfeder 2 ein Traglager 3 abstützt, an welchem ein Tragarm 13 des Aggregats aufgenommen und abgestützt ist. Die Elastomerfeder 2 selbst wiederum ist an einem Auflager 4 abgestützt. Das Aggregatlager 1 weist ein Hydraulikvolumen 20 mit einer Arbeitskammer 5 und eine Ausgleichskammer 6 auf, die über eine Kanaleinheit 10 mit einem Kanal 11 miteinander verbunden sind, wobei sich zwischen den aneinander grenzenden Kammern 5, 6 die Kanaleinheit 10 befindet, an der eine flexible Membran 7 angeordnet ist, die die Kammern 5, 6 voneinander trennt.

Die Auslenkungen der Membran 7 bei Beaufschlagung des Hydraulikvolumens 20 in den Kammern 5, 6 werden durch eine Wegbegrenzung 8 begrenzt, die als starres, an der Kanaleinheit 10 zu beiden Flachseiten der Membran benachbartes Gitter 9 ausgebildet ist. Das Gitter 9 ist aus regelmäßigen, offenen Sechsecken eines steifen Materials aufgebaut, die sich jeweils einreihig hintereinander angeordnet in einer zu der Membran 7 in etwa parallelen Ebene beidseitig zu dieser erstrecken. Jedes der Sechsecke des Gitters 9 ist dabei über mehrere Verbindungsstege 15 mit der Kanaleinheit 10 verbunden, von deren Rand sie in den lichten Querschnitt eines Durchgriffs 16 der Kanaleinheit 10 ragen, die von der Membran 7 verschlossen ist.

Nur in der Fig. 2 erkennt man, dass die Kammern 5, 6 des Hydraulikvolumens 20 an der Kanaleinheit 10 über den Kanal 11 miteinander verbunden sind, wobei der Kanal 11 im Querschnitt auch in der Fig. 1 zu sehen ist. In der Fig. 2 erkennt man hierzu an dem für den Betrachter rechten unteren Bereich der Kanaleinheit 10 eine Auslassung des umlaufenden Randes als Kanaleintritt 12, durch welchen die nicht weiter dargestellte Hydraulikflüssigkeit aus der Arbeitskammer 5 in den Kanal 11 gelangen kann. Der Kanal 11 umläuft hierbei eine Einschnürung 17 der Kanaleinheit, die wiederum den Durchgriff 16 einfasst, so dass die Hydraulikflüssigkeit an dem Kanalaustritt 14 in die Ausgleichskammer 6 gelangen kann.

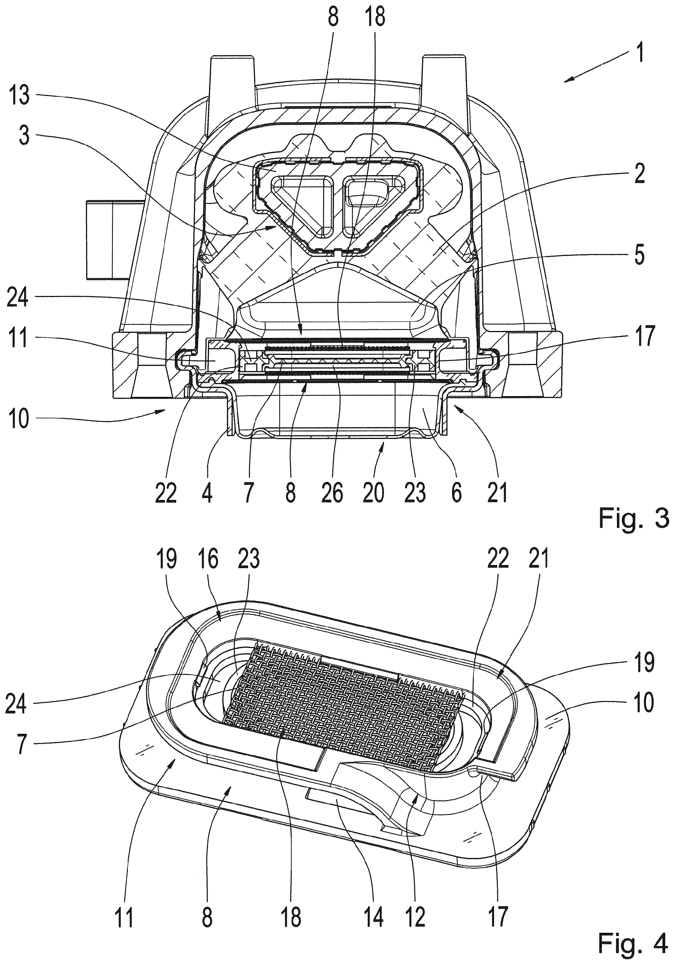

In den Fig. 3 bis 8 ist demgegenüber das Aggregatlager in einer Ausführung dargestellt, bei der die Wegbegrenzung gemäß der Erfindung nachgiebig ausgebildet ist, vorliegend durch Ausführung mit einem maschenartigen Flächengebilde als Struktur.

Mit Blick zunächst auf die Fig. 3 und 4 kann hierzu festgehalten werden, dass die allgemeinen Ausführungen zu den Fig.1 und 2 zu dem hydraulisch gedämpften Aggregatlager 1 an sich ihre Gültigkeit behalten. Erneut findet man nämlich das Aggregatlager 1 mit der ein Traglager 3 abstützenden Elastomerfeder 2 und dem an dem Traglager 3 aufgenommenen Tragarm 13. Die Elastomerfeder 2 selbst ist erneut an einem Auflager 4 abgestützt. Erkennbar ist weiter auch das Hydraulikvolumen 20 des Aggregatlagers 1 mit einer Arbeitskammer 5 und einer Ausgleichskammer 6, verbunden über die Kanaleinheit 10 mit einem Kanal 11. Hierbei befindet sich zwischen den aneinander grenzenden Kammern 5, 6 wieder die Kanaleinheit 10, an der die flexible Membran 7 angeordnet ist, die die Kammern 5, 6 voneinander trennt.

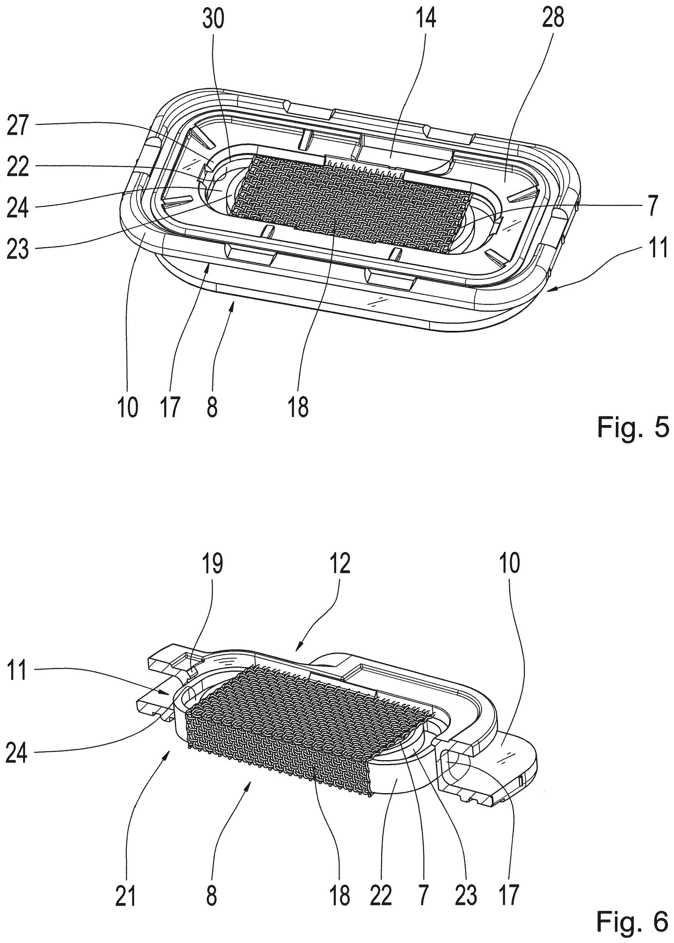

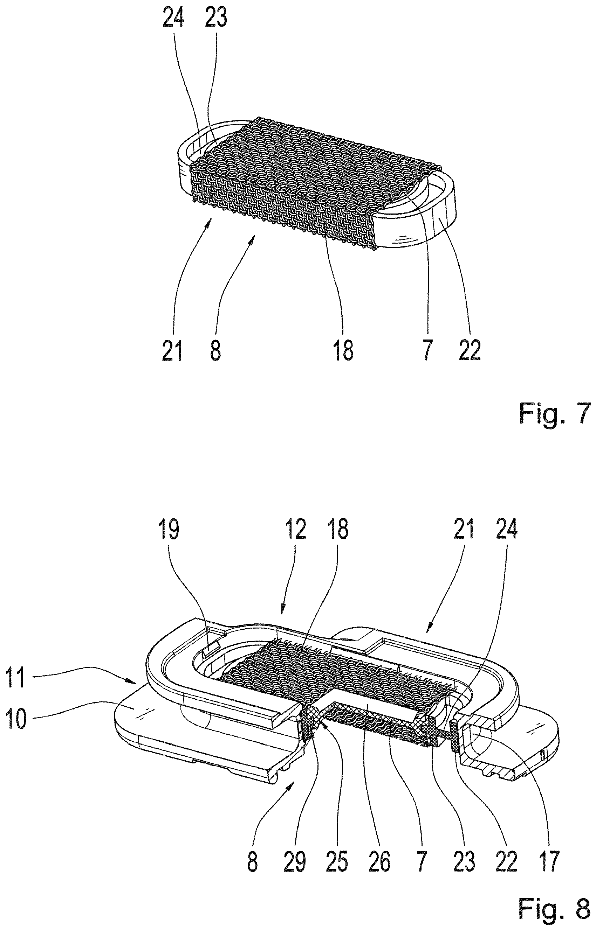

Weiter ist in der Fig. 4 wiederum an dem für den Betrachter rechten unteren Bereich der Darstellung an der Kanaleinheit 10 eine Auslassung des umlaufenden Randes als Kanaleintritt 12 gezeigt, durch welchen die nicht weiter dargestellte Hydraulikflüssigkeit aus der Arbeitskammer 5 in den Kanal 11 gelangen kann. Der Kanal 11 umläuft hierbei als eine Einschnürung 17 die Kanaleinheit 10, die wiederum den Durchgriff 16 einfasst, so dass die Hydraulikflüssigkeit an dem Kanalaustritt 14 in die Ausgleichskammer 6 gelangen kann. Dieser Kanalaustritt 14 ist ebenso in der Fig. 4 gut zu erkennen, während man den Kanaleintritt 12 weiter auch in den Fig. 6 und 8 sieht.

Bereits in der Fig. 3, genauer aber noch in den sich anschließenden Fig. 4 bis 8, erkennt man den kardinalen Unterschied zum Stand der Technik in den Fig.1 und 2 bei Betrachtung der die Membran 7 einfassenden Wegbegrenzung 8. Im Gegensatz zur Ausbildung als starres Gitter 9 im Stand der Technik, ist die erfindungsgemäße Wegbegrenzung nunmehr nachgiebig ausgebildet, im gezeigten Ausführungsbeispiel als maschenartiges Flächengebilde 18, welches in erster Linie zunächst ein Rahmenteil 21 schlauchartig einhüllt, das am besten in den Fig. 6 bis 8 zu erkennen ist. Das Rahmenteil 21 weist einen Außenrahmen 22 und einen Innenrahmen 23 auf, bei denen sich Stege parallel zueinander erstrecken und in abgerundeten, zumindest teilweise oder ganz gekrümmten Endbereichen münden, wobei die Länge der Stege erheblich größer ist als ihre Höhe und Breite, so dass die Bestandteile des Rahmenteils 21 und damit dieses selbst langgestreckt und flach anmuten.

Von dem Innenrahmen 23 des Rahmenteils 21 springt, wie in Fig. 8 zu erkennen, an dessen Innenseite umlaufend ein Absatz 29 quer nach innen vor, der von dem Membranrand 25 allseitig übergriffen ist, wodurch die Membran 7 in dem Innenrahmen 23 eingespannt ist. An seiner Außenseite ist der Innenrahmen 23 durch einen Zwischensteg 24 mit dem Außenrahmen 22 verbunden, der den Innenrahmen 23 umläuft. Das maschenartige Flächengebilde 18 der Wegbegrenzung 8 umfängt hierbei, erkennbar in den Fig. 4 bis 8, den Außenrahmen 22 auf einer solchen Länge, dass der Innenrahmen 23 bis auf seine äußersten Endbereiche praktisch vollständig überdeckt ist, so dass die Membran 7 bei starker Auslenkung unterstützbar ist, während an dem Außenrahmen 22 die überdeckten Stege noch nicht in ihre Endbereiche übergehen, also parallel zueinander stehen. Gut sichtbar ist in den Fig. 3 und 8, dass die Membran in nicht ausgelenktem Zustand tatsächlich keinen Kontakt zu dem Flächengebilde 18 der Wegbegrenzung 8 hat. Hierdurch wird der zwischen diesen tatsächlich vorhandene Zwischenraum 26 auch erst bei Auslenkung der Membran 7 aus dieser Ruhelage überbrückt werden, so dass aus der anfangs nicht vorhandenen zunächst eine punktuelle, und nach und nach eine flächige Unterstützung bei starker Beaufschlagung der Membran 7 entsteht.

Das Rahmenteil 21 mit der Membran 7 ist an der Kanaleinheit 10 festgelegt. Dabei stützt sich die der Ausgleichskammer 6 zugewandte Stirnseite des Außenrahmens 22 an einem Randvorsprung 27 ab, der in den Durchgriff 16 der Kanaleinheit ragt. Dieser Randvorsprung 27 ist aus mehreren Vorsprungsteilen gebildet, die den Rand eines Bodendurchgriffs 30 umlaufen, der zu einem Bodenteil 28 gehört, welches die Kanaleinheit 10 bodenseitig in Richtung der Ausgleichskammer 6 begrenzt. Dies ist lediglich in der Fig. 4 zu erkennen, während in den Fig. 6 und 8 auf die Darstellung des Bodenteils 28 aus Gründen der Übersichtlichkeit verzichtet wurde, so dass dort die Abstützung des Rahmenteils 21 bzw. genauer seines Außenrahmens nicht zu sehen ist. Bei Anordnung an der Kanaleinheit 10 wird das Rahmenteil 21 in den Durchgriff 16 gewissermaßen eingefädelt, an einem seiner Endbereiche mit dem Außenrahmen 22 die dortige Rastnase 19 bereits untergreifend an dem Randvorsprung 27 abgestützt, während der andere, gegenüberliegende Endbereich des Rahmenteils 21 anschließend mit der zugeordneten Rastnase 19 verrastet wird. Das Rahmenteil ist dann so angeordnet, dass die Außenseite des Außenrahmens 22 an der Innenseite desjenigen Bereichs der Kanaleinheit anliegt, dessen Außenseite die Einschnürung 17 und damit den Kanal 11 bildet.

Den Fig. 3 bis 8 ist schließlich auch zu entnehmen, dass das Flächengebilde 18 der nachgiebigen Wegbegrenzung 8 mit einer engen Maschenweite ausgebildet ist, die es der Membran 7 nicht gestattet, zwischen diese Maschen einzudringen. Außerdem erkennt man bei dem gezeigten Ausführungsbeispiel, dass die Dicke von Flächengebilde 18 und Membran in etwa in der gleichen Größenordnung ausgebildet sein können.

Demnach betrifft die vorstehend beschriebene Erfindung ein hydraulisch gedämpftes Aggregatlager 1, insbesondere für ein Kraftfahrzeug, wobei das Aggregatlager 1 eine Kanaleinheit 10 aufweist, die mit einer zumindest bereichsweise schwingungsfähig angeordneten Membran 7 aus einem gummielastischen Werkstoff und mit zumindest einer Wegbegrenzung 8 zur Begrenzung einer Auslenkung der Membran 7 versehen ist. Um ein hydraulisch gedämpftes Aggregatlager 1 zur Verfügung zu haben, das die Nachteile des Standes der Technik vermeidet und die Geräuschentwicklung bei schneller, extremaler Belastung des Lagers 1 vermindert oder gar vermeidet, wird vorgeschlagen, die zumindest eine Wegbegrenzung 8 zur Verbesserung des Akustikverhaltens des Aggregatlagers 1 nachgiebig auszubilden.

### Bezuqszeichen

- 1: Aggregatlager
- 2: Elastomerfeder
- 3: Traglager
- 4: Auflager
- 5: Arbeitskammer
- 6: Ausgleichskammer
- 7: Membran
- 8: Wegbegrenzung
- 9: Gitter
- 10: Kanaleinheit
- 11: Kanal
- 12: Kanaleintritt
- 13: Tragarm
- 14: Kanalaustritt
- 15: Verbindungssteg
- 16: Durchgriff
- 17: Einschnürung
- 18: Flächengebilde
- 19: Rastnase
- 20: Hydraulikvolumen
- 21: Rahmenteil
- 22: Außenrahmen
- 23: Innenrahmen
- 24: Zwischensteg
- 25: Membranrand
- 26: Zwischenraum
- 27: Randvorsprung
- 28: Bodenteil
- 29: Absatz
- 30: Bodendurchgriff

## Patentansprüche

1. Hydraulisch gedämpftes Aggregatlager (1), insbesondere für ein Kraftfahrzeug, das Aggregatlager (1) aufweisend eine Kanaleinheit (10), welche eine zumindest bereichsweise schwingungsfähig angeordnete Membran (7) aus einem gummielastischen Werkstoff und zur Begrenzung einer Auslenkung der Membran (7) zumindest eine Wegbegrenzung (8) aufweist, die zur Verbesserung des Akustikverhaltens des Aggregatlagers (1) nachgiebig ausgebildet ist, **dadurch gekennzeichnet, dass** die Membran (7) in einem von der als maschenartiges Flächengebilde (18) ausgebildeten Wegbegrenzung (8) schlauchartig eingehüllten Rahmenteil (21) aufgenommen ist, das mit der Kanaleinheit (10) in Gebrauchsstellung lösbar verbindbar ist.

2. Aggregatlager nach Anspruch 1, **dadurch gekennzeichnet, dass** die zumindest eine Wegbegrenzung (8) eine an ihren Enden offene Schlauchform bildet, die die Membran (7) einhüllt und zu deren Flachseiten benachbart angeordnet ist.

3. Aggregatlager nach Anspruch 1 oder 2, **dadurch gekennzeichnet, dass** die Wegbegrenzung (8) mit dem mit der Kanaleinheit (10) verbindbaren, die Membran (7) einfassenden Rahmenteil (21) durch einen Herstellungsprozess dauerhaft verbunden ist.

4. Aggregatlager nach einem der Ansprüche 1 bis 3, **dadurch gekennzeichnet, dass** die Wegbegrenzung (8) in ihrer Ruhestellung vorgespannt oder spannungsfrei angeordnet ist.

5. Aggregatlager nach einem der Ansprüche 1 bis 4, **dadurch gekennzeichnet, dass** die Wegbegrenzung (8) sich mit zunehmendem, durch die Membran (7) ausgeübtem Druck an deren Kontur anpasst.

6. Aggregatlager nach einem der Ansprüche 1 bis 5, **dadurch gekennzeichnet, dass** die Wegbegrenzung (8) zumindest in einem extremalen Auslenkungsbereich der Membran (7) an dieser eine flächige Unterstützung bildet.

7. Aggregatlager nach einem der Ansprüche 1 bis 6, **dadurch gekennzeichnet, dass** die Wegbegrenzung (8) das Flächengebilde (18) aufweist, das durch ein Gewebe, eine Maschenware, ein Gewirke oder einen Faserverbund aus wenigstens einem Material eines Textils, aus Glas, Kunststoff, Kohlenstoffverbindungen und/oder Aramid gebildet ist.

8. Aggregatlager nach einem der Ansprüche 1 bis 7, **dadurch gekennzeichnet, dass** das Rahmenteil (21) durch Rast- oder Schnappverbindungen an der Kanaleinheit (10) gehalten und durch deren Öffnung wieder von dieser lösbar ist.

9. Aggregatlager nach einem der Ansprüche 1 bis 8, **dadurch gekennzeichnet, dass** die Wegbegrenzung (8) punkt- oder bereichsweise mit der Membran (7) über wenigstens ein Verbindungsmittel verbindbar oder verbunden ist.

10. Aggregatlager nach Anspruch 9, **dadurch gekennzeichnet, dass** das wenigstens eine Verbindungsmittel durch mindestens einen Gumminoppen oder ein dergleichen flexibles Anlenkmittel gebildet ist.

11. Aggregatlager nach Anspruch 9 oder 10, **dadurch gekennzeichnet, dass** der mindestens eine Gumminoppen den Querschnitt der Membran (7) vollständig und denjenigen einer ein- oder beidseitig der Membran (7) angeordneten Wegbegrenzung (8) wenigstens teilweise durchtritt.

12. Aggregatlager nach einem der vorhergehenden Ansprüche, **dadurch gekennzeichnet, dass** die wenigstens eine Wegbegrenzung (8) an ihrer der Membran (7) zugewandten Seite zumindest bereichsweise mit einem flächigen Elastomerauftrag versehen ist.

## Claims

1. Hydraulically damped unit bearing (1), in particular for a motor vehicle, wherein the unit bearing (1) has a channel unit (10) which is provided with a membrane (7) which is arranged to be vibratory at least in regions and which is made of an elastic rubber material, and with at least one travel limiter (8) for limiting a deflection of the membrane (7), which in order to improve the acoustic characteristics of the unit bearing (1) is configured to be flexible, **characterised in that** the membrane (7) is accommodated in a frame section (21) that is tubularly enveloped by the travel limiter (8) configured as a mesh-like textile surface structure (18), which is removably connectable to the channel unit (10) in the usage position.

2. Unit bearing according to claim 1, **characterised in that** the at least one travel limiter (8) has an open tubular form at its ends which envelopes the membrane (7) and is arranged adjacent to the flat sides thereof.

3. Unit bearing according to claim 1 or claim 2, **characterised in that** the travel limiter (8) is durably connected to the frame section (21) surrounding the membrane (7) and connectable with the channel unit (10), by a manufacturing process.

4. Unit bearing according to any one of claims 1 to 3, **characterised in that** the travel limiter (8) is arranged in its rest position pre-stressed or stress-free.

5. Unit bearing according to any one of claims 1 to 4, **characterised in that** as the pressure exerted by the membrane (7) increases the travel limiter (8) adapts to the contour of this.

6. Unit bearing according to any one of claims 1 to 5, **characterised in that** the travel limiter (8) at least in an extreme deflection range of the membrane (7) forms a flat support on this.

7. Unit bearing according to any one of claims 1 to 6, **characterised in that** the travel limiter (8) comprises the textile surface structure (18), that is formed by a web, a knitted fabric, a mesh or a fibre composite of at least one textile material, glass, carbon compounds and/or aramid.

8. Unit bearing according to any one of claims 1 to 7, **characterised in that** the frame section (21) is retained on the channel unit (10) by means of snap-lock or snap-action connections and can be detached from this again by opening these.

9. Unit bearing according to any one of claims 1 to 8, **characterised in that** the travel limiter (8) is connectable or connected via at least one connecting means point by point or area by area with the membrane (7).

10. Unit bearing according to claim 9, **characterised in that** the at least one connecting means is formed by at least one rubber stud or a similarly flexible linking means.

11. Unit bearing according to claim 9 or claim 10, **characterised in that** the at least one rubber stud passes through the cross-section of the membrane (7) completely and that of a travel limiter (8) arranged on one or both sides of the membrane (7) at least partially.

12. Unit bearing according to any one of the preceding claims, **characterised in that** the at least one travel limiter (8) on its side facing the membrane (7) is provided at least in certain zones with an extensive application of elastomer.

## Revendications

1. Palier de groupe (1) à amortissement hydraulique, en particulier pour un véhicule automobile, le palier de groupe (1) comportant une unité de canal (10) qui comporte une membrane (7), disposée au moins par tronçons de façon oscillante, en un matériau ayant l'élasticité du caoutchouc et, pour limiter une déviation de la membrane (7), au moins une limitation de course (8) qui est constituée de façon souple pour améliorer le comportement acoustique du palier de groupe (1), **caractérisé en ce que** la membrane (7) est logée dans une partie de cadre (21) qui est enveloppée de façon tubulaire par la limitation de course (8) constituée en tant que structure plane (18) de type maillé, et qui peut être raccordée de façon amovible à l'unité de canal (10) dans la position d'utilisation.

2. Palier de groupe selon la revendication 1, **caractérisé en ce que** la au moins une limitation de course (8) forme une forme tubulaire ouverte à ses extrémités qui enveloppe la membrane (7) et qui est disposée au voisinage de ses côtés plats.

3. Palier de groupe selon la revendication 1 ou 2, **caractérisé en ce que** la limitation de course (8) est raccordée de façon durable par un processus de fabrication à la partie de cadre (21) pouvant être raccordée à l'unité de canal (10) et entourant la membrane (7).

4. Palier de groupe selon l'une des revendications 1 à 3, **caractérisé en ce que** la limitation de course (8) est précontrainte dans sa position de repos ou est disposée sans tension.

5. Palier de groupe selon l'une des revendications 1 à 4, **caractérisé en ce que**, quand la pression exercée par la membrane (7) augmente, la limitation de course (8) s'adapte au contour de la membrane.

6. Palier de groupe selon l'une des revendications 1 à 5, **caractérisé en ce que**, au moins dans une plage de déviation extrémale de la membrane (7), la limitation de course (8) forme sur celle-ci un support plat.

7. Palier de groupe selon l'une des revendications 1 à 6, **caractérisé en ce que** la limitation de course (8) comporte la structure plane (18) qui est formée par un tissu, un article à mailles, un tricot ou un composite renforcé de fibres en au moins un matériau d'un textile, de verre, de matière plastique, de composés carbonés et/ou d'aramide.

8. Palier de groupe selon l'une des revendications 1 à 7, **caractérisé en ce que** la partie de cadre (21) est retenue sur l'unité de canal (10) par des raccordements par encliquetage ou par enclenchement et peut être détachée de nouveau de celle-ci à travers l'ouverture de celle-ci.

9. Palier de groupe selon l'une des revendications 1 à 8, **caractérisé en ce que** la limitation de course (8) peut être raccordée ou est raccordée ponctuellement ou par tronçons à la membrane (7) par le biais d'au moins un moyen de raccordement.

10. Palier de groupe selon la revendication 9, **caractérisé en ce que** le au moins un moyen de raccordement est formé par au moins un picot en caoutchouc ou un moyen d'articulation de flexibilité similaire.

11. Palier de groupe selon la revendication 9 ou 10, **caractérisé en ce que** le au moins un picot en caoutchouc traverse complètement la section transversale de la membrane (7) et au moins partiellement celle d'une limitation de course (8) disposée d'un ou de deux côtés de la membrane (7).

12. Palier de groupe selon l'une des revendications précédentes, **caractérisé en ce que**, sur son côté tourné vers la membrane (7), la au moins une limitation de course (8) est au moins par tronçons munie d'une application d'élastomère plat.
